Europäisches Patentamt

European Patent Office

Office européen des brevets

(11) Veröffentlichungsnummer: **0 464 310 A2**

## EUROPÄISCHE PATENTANMELDUNG

(21) Anmeldenummer: **91104131.7**

(22) Anmeldetag: **18.03.91**

(51) Int. Cl.⁵: **H01S 3/083**, H01S 3/034, G01C 19/64

(30) Priorität: **29.05.90 DE 4017188**

(43) Veröffentlichungstag der Anmeldung:
**08.01.92 Patentblatt 92/02**

(84) Benannte Vertragsstaaten:
**DE FR GB IT**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Bernard, Walter, Dr.**
**Allmendweg 6**
**W-7758 Meersburg(DE)**
Erfinder: **Langener, Klaus**
**Alte Dorfstrasse 61**
**W-7770 Überlingen(DE)**
Erfinder: **Neumann, Werner**
**Hinter den Gärten 1**
**W-7776 Owingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Gas-Ringlaser.**

(57) Ein Gas-Ringlaser weist einen Keramikblock mit einem in sich geschlossenen, längs der Seiten eines gleichseitigen Dreiecks verlaufenden gasgefüllten Kanal (12) auf, der einen Resonanzhohlraum bildet. Eine Anode (64) und Kathoden (76, 78) gestatten die Erzeugung zweier Gasentladungen. Durch dielektrische Spiegel (26, 28 und 30) können zwei Lichtbündel mit entgegengesetztem Umlaufsinn in dem Kanal geführt werden. Zur leichteren Herstellung besteht der Keramikblock (10) aus einer Glaskeramik, die aus einem Grünkeramikkörper durch Sintern hergestellt ist. Die Spiegel (26, 28, 30) sind in metallischen Justierfassungen (80, 82, 84) mit Glaslot (98) in den Keramikblock (10) eingelötet. Auch die anderen metallischen Durchführungen für die Elektroden in den Hohlraum sind durch Glaslot gedichtet. Die Erfindung betrifft auch ein Verfahren zur Herstellung eines solchen Gas-Ringlasers. Der Gas-Ringlaser kann als Inertialsensor zur Messung von Drehgeschwindigkeiten mittels des Sagnac-Effektes dienen.

Die Erfindung betrifft einen Gas-Ringlaser mit einem Keramikblock mit einem einen Hohlraum bildenden, in sich geschlossenen, gasgefüllten Kanal, Elektroden zur Erzeugung einer Gasentladung und Spiegeln, durch welche zwei Lichtbündel mit entgegengesetztem Umlaufsinn in dem Kanal geführt werden.

Solche Gas-Ringlaser sind in Form von Helium-Neon-Ringlasern bekannt. Sie dienen der Messung von Drehgeschwindigkeiten im inertialen Raum unter Ausnutzung des Sagnac-Effektes. Solche in einem Keramikblock gebildeten Ringlaser haben den Vorteil, daß sie hohe Beschleunigungen aushalten.

Es sind Helium-Neon-Ringlaser mit einem Keramikblock bekannt. Der Keramikblock ist dabei aus Glaskeramik aufgebaut. Die mit entgegengesetztem Umlaufsinn umlaufenden Lichtbündel werden über dielektrische Spiegel geführt. Diese Spiegel reflektieren mit sehr hohem Wirkungsgrad in dem Bereich der Wellenlänge des Ringlasers. Von den umlaufenden Lichtbündeln werden Teillichtbündel abgezweigt und zur Interferenz gebracht, so daß eine Schwebungsfrequenz erhalten wird, die proportional der Drehgeschwindigkeit um eine zur Ebene des Laserringes senkrechte Achse ist.

Ein Ringlaser dieser Art enthält in einem Keramikblock einen Kanal, der längs der Seiten eines gleichseitigen Dreiecks verläuft. In der Mitte einer der Dreieckseiten weist der Kanal eine Verengung ("Pinhole") auf, welche den Bündelquerschnitt der umlaufenden Lichtbündel begrenzt. Im Bereich dieser Verengung sitzt in einer Ausnehmung des Keramikblocks eine Anode. In der Mitte der beiden anderen Dreieckseiten sitzt je eine Kathode. In den Ecken sind dielektrische Spiegel senkrecht zur jeweiligen Winkelhalbierenden angeordnet, durch welche die Lichtbündel in der einen und in der anderen Richtung längs des dreieckförmigen Weges geleitet werden.

Die Fertigung bekannter Ringlaser mit Keramikblock ist sehr aufwendig. Sie erfordert die Bearbeitung von Glaskeramik. Die dielektrischen Spiegel werden durch optisches Ansprengen auf hochgenau ausgerichteten Flächen fixiert. Das macht es notwendig, die Glaskeramik von vornherein hochgenau zu bearbeiten. Elektrische Durchführungen werden bei bekannten Ringlasern dieser Art in Indiumdichttechnik realisiert.

Der Erfindung liegt die Aufgabe zugrunde, einen Gas-Ringlaser mit Keramikblock auf einfachere und preisgünstigere Weise zu fertigen als dies bei vorbekannten Ringlasern dieser Art möglich ist.

Zur Lösung dieser Aufgabe besteht bei einem Gas-Ringlaser der eingangs genannten Art der Keramikblock aus einer Glaskeramik, die aus einem Grünkeramikkörper durch Sintern hergestellt ist.

Grünkeramik ist ein Material, das sich spanabhebend bearbeiten, also bohren, drehen und fräsen läßt. Durch einen Sinterprozeß kann aus dieser Grünkeramik eine Glaskeramik gewonnen werden.

Die Spiegel können in metallischen Justierfassungen mit Glaslot in den Keramikblock eingelötet sein. In diesen Justierfassungen ist nach dem Einlöten eine genaue Justierung der Spiegel möglich.

Metallische Durchführungen in den Hohlraum können durch Glaslot gedichtet sein. Und damit wird die aufwendige Indiumdichttechnik vermieden.

Ein Verfahren zur Herstellung eines Gas-Ringlasers dieser Art enthält demgemäß die Verfahrensschritte

(a) Pressen eines Rohteils aus Grünkeramik,

(b) spanende Bearbeitung des Rohteils und

(c) Ausheizen des spanend bearbeiteten Rohteils zur Umwandlung der Grünkeramik in Glaskeramik durch Sinterung.

Nach dem Sintern können die Justierfassungen mit den Spiegeln mit Glaslot in Ausnehmungen auf der Mantelfläche des erhaltenen Glaskeramikblocks eingelötet werden. Nach kompletter Montage des Gas-Ringlasers und Ausheizen des Keramikblocks können die Spiegel in den Justierfassungen justiert werden.

Auch die Elektroden können mittels Glaslots in den Glaskeramikblock eingelötet werden.

Ein Ausführungsbeispiel der Erfindung ist nachstehend unter Bezugnahme auf die zugehörige Zeichnung näher erläutert, die einen Schnitt durch einen Helium-Neon-Ringlaser darstellt, der für Drehgeschwindigkeitsmessungen unter Ausnutzung des Sagnac-Effektes geeignet ist.

Der Helium-Neon-Ringlaser enthält einen flachzylindrischen Keramikblock 10 aus Glaskeramik. In dem Keramikblock ist in einer zur Zylinderachse senkrechten Ebene ein Ringkanal 12 vorgesehen. Dieser Ringkanal 12 verläuft längs der Seiten 14, 16 und 18 eines gleichseitigen Dreiecks. Die Ecken dieses gleichseitigen Dreiecks liegen auf der Mantelfläche des zylindrischen Keramikblocks. Im Bereich der Ecken des gleichseitigen Dreiecks sind in der Mantelfläche des Keramikblocks 10 flach-zylindrische Ausnehmungen 20, 22 und 24 angebracht. Die Ausnehmungen 20, 22, 24 schneiden den Ringkanal 12 an. In den Ecken des gleichseitigen Dreiecks sind dielektrische Spiegel 26, 28 und 30 angeordnet. Die Ecken des gleichseitigen Dreiecks liegen jeweils auf einer der Spiegelebenen. Die Spiegelebenen sind senkrecht zu den Winkelhalbierenden des gleichseitigen Dreiecks. Ein längs einer Seite des gleichseitigen Dreiecks einfallendes Lichtbündel wird daher längs der benachbarten Seite dieses Dreiecks reflektiert. Die Spiegelanordnung ist somit geeignet, ein Lichtbündel linksherum oder rechtsherum längs der Seiten 14, 16 und 18 des gleichseitigen Dreiecks zu führen.

Die Teile des Kanals, die längs der beiden Seiten 14 und 16 des gleichseitigen Dreiecks verlaufen, weisen je einen Abschnitt 32 bzw. 34 von größerem Durchmesser und einen engeren Abschnitt 36 bzw. 38 auf. Der Abschnitt 32 erstreckt sich etwas über die Winkelhalbierende zwischen den Seiten 16 und 18 des gleichseitigen Dreiecks hinaus. Von diesem Abschnitt 32 geht ein radialer Kanal 40 ab. Der Kanal 40 verläuft längs der besagten Winkelhalbierenden der Seiten 16 und 18. Der Kanal 40 mündet auf dem Grunde einer flach-zylindrischen Ausnehmung 42, die in der Mantelfläche des Keramikblocks 10 vorgesehen ist. In gleicher Weise erstreckt sich der Abschnitt 34 geringfügig über die Winkelhalbierende zwischen den Seiten 14 und 18 hinaus. Ein radialer Kanal 44 verläuft längs dieser Winkelhalbierenden zwischen den Seiten 14 und 18. Der Kanal 44 mündet auf dem Grund einer flach-zylindrischen Ausnehmung 46, die in der Mantelfläche des Keramikblocks 10 vorgesehen ist.

Der längs der Seite 18 des gleichseitigen Dreiecks verlaufende Teil des Ringkanals 12 enthält einen ersten Abschnitt 48 und einen zweiten Abschnitt 50. Zwischen den beiden Abschnitten 48 und 50 ist eine Verengung 52 des Ringkanals 12 gebildet (Pinhole).

Im Bereich der Verengung 52 weist der Keramikblock 10 eine Ausnehmung 54 auf. Die Ausnehmung hat zylindrische Grundform mit einer schmalen Ringschulter 56 etwa in der Mitte der Mantelfläche. Die Ausnehmung 54 ist über einen Kanal 58 mit dem Abschnitt 48 und über einen Kanal 60 mit dem Abschnitt 50 verbunden.

In der Ausnehmung 54 sitzt eine Kappe 62 mit einer Anode 64. Die Kappe 62 sitzt mit ihrem Rand auf der Ringschulter 56 auf. Die Kappe ist dann mit Glaslot 66 in den Block 10 dicht eingelötet. In den Ausnehmungen 42 und 46 des Keramikblocks 10 sitzen Kappen 68 bzw. 70. Diese Kappen sind ebenfalls mittels eines Glaslots 72 bzw. 74 in die Ausnehmungen 42 und 46 des Keramikblocks 10 dicht eingelötet. In den Kappen 68 und 70 sitzen Kathoden 76 bzw. 78.

Die dielektrischen Spiegel 26, 28 und 30 sind in Justierfassungen 80, 82 und 84 gehalten. Die dielektrischen Spiegel 26, 28, 30 bilden flach-zylindrische Körper. Sie haben somit kreisförmigen Querschnitt. Die Justierfassungen 80, 82, 84 sind übereinstimmend ausgebildet. Nachstehend wird daher nur die Justierfassung 82 näher beschrieben. Die Justierfassung 82 enthält einen äußeren Fassungsteil 86, der sich um den inneren Teil der Mantelfläche des Spiegels 28 erstreckt. An den äußeren Fassungsteil 86 schließt sich ein nach innen eingezogener Abschnitt 88 an. Der Abschnitt 88 liegt mit einem Flansch 90 an der Vorderseite des Spiegels 28 an. Dann ist die Justierfassung 82 wieder nach außen umgebogen und bildet einen Rand 92. Von diesem inneren Rand 92 erstreckt sich ein ringscheibenförmiger Abschnitt 94 parallel zu dem Flansch 90 wieder nach außen. An den nach innen eingezogenen Abschnitt 88 schließt sich wieder ein im wesentlichen zylindrischer innerer Fassungsteil 96 an, der mit dem äußeren Fassungsteil 86 im wesentlichen fluchtet. Der innere Fassungsteil 96 ist durch Glaslot 98 in die Ausnehmung 22 dicht eingelötet.

Der Ringkanal 12 und die damit in Verbindung stehenden durch die Spiegel 26, 28, 30 bzw. Kappen 62, 68, 70 abgeschlossenen Ausnehmungen 20, 22, 24 bzw. 54, 42, 46 sind mit einem Gemisch von Helium und Neon unter niedrigem Druck gefüllt. Bei Anlegen einer Spannung zwischen die Anode 64 und die Kathoden 76 und 78 werden zwei Gasentladungen von der Anode über Kanal 58, Abschnitt 48 und Abschnitt 36 zur Kathode 76 bzw. von der Anode 64 über Kanal 60, Abschnitt 50 und Abschnitt 38 zur Kathode 78 erzeugt. Die Neonatome werden dabei in einen angeregten Zustand überführt. Dadurch, daß das Neon zwei Isotopen enthält, haben die angeregten Zustände geringfügig unterschiedliche Energieniveaus. Durch Justage der Spiegel 26, 28 und 30 wird erreicht, daß Lichtbündel durch die Verengung 52 hindurch genau längs der Seiten 14, 16 und 18 des gleichseitigen Dreiecks geführt werden. Bei dieser Justage erfolgt eine stimulierte Emission von Strahlung, so daß eine kohärente Laserstrahlung erzeugt wird. Die Wellen laufen dabei einmal im Uhrzeigersinn und zum anderen entgegen dem Uhrzeigersinn. Die beiden Isotope des Neons und die beiden Gasentladungen sorgen dafür, daß beide umlaufenden Wellen auftreten. Der Ringkanal 12 bildet einen Resonanzhohlraum des Gas-Ringlasers.

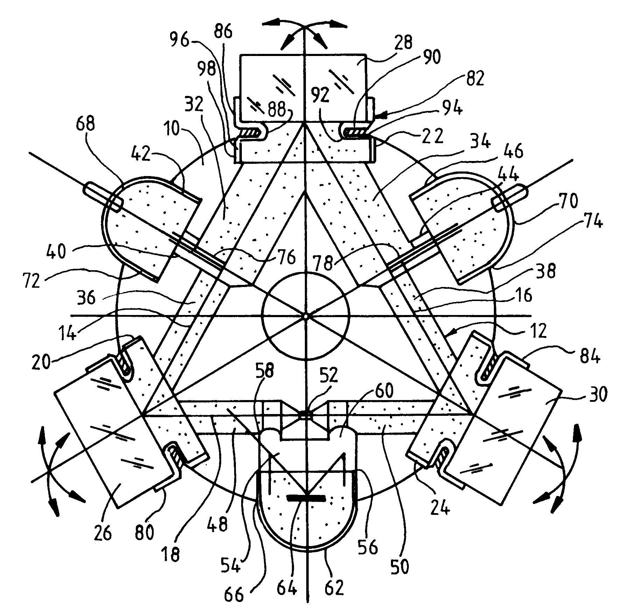

Wenn sich der Gas-Ringlaser um eine zu der Papierebene der Figur senkrechte Achse dreht, dann verändern sich durch den Sagnac-Effekt die optischen Weglängen für das linksherum und das rechtsherum laufende Licht. Dementsprechend verändern sich auch gegensinnig die Frequenzen des Gas-Ringlasers für diese beiden Umlaufrichtungen. Die Schwebungsfrequenz liefert ein Maß für die Drehgeschwindigkeit des Gas-Ringlasers. Die Schwebungsfrequenz wird dadurch erhalten, daß die rechts herum und links herum laufenden Lichtwellen teilweise ausgekoppelt und zur Interferenz gebracht werden.

Der beschriebene Gas-Ringlaser wird auf folgende Weise hergestellt:
Es wird zunächst ein Rohteil aus sogenannter "Grünkeramik" hergestellt. Das ist ein Keramikmaterial, das sich spanend bearbeiten läßt. Die Grünkeramik kann also gebohrt und gefräst werden. Auf diese Weise wird zunächst der Rohteil bearbeitet. Es werden Bohrungen längs der Seiten 14, 16 und 18 des gleichseitigen Dreiecks eingebracht. Die Bohrungen von oben in der Figur werden etwa bis zur Hälfte der Dreieckseite mit Bohrern von relativ großem Durchmesser angebracht. Von der entgegengesetzten Seite her, also von links unten und rechts unten in der Figur wird eine engere Gegenbohrung angebracht. Längs der Winkelhalbierenden zwischen den Seiten 14 und 18 bzw. den Seiten 16 und 18 wird ebenfalls eine Bohrung angebracht, welche zu den Kanälen 44 und 40 führt.

Von links in der Figur wird der Abschnitt 48 gebohrt. Von rechts in der Figur wird der Abschnitt 50 gebohrt.

Es werden dann die Ausnehmungen 20, 22, 24 sowie 42, 46 und 54 gefräst. Auf dem Grund der Ausnehmung 54 werden die Kanäle 58 und 60 gebohrt. Eine weitere enge Bohrung längs eines der Abschnitte 48 oder 50 liefert die Verengung (Pinhole) 52.

Das so erhaltene Formteil wird ausgeheizt, also auf hohe Temperatur gebracht. Dabei sintert die Grünkeramik zu einer Glaskeramik. Mit der Sinterung ist eine gewisse Schrumpfung verbunden. Diese Schrumpfung kann bei der Bemessung des Rohteils und der Bohrungen von vornherein berücksichtigt werden.

Daraufhin werden die Kappen 62, 68 und 70 mittels Glaslots in die Ausnehmungen 54, 42, 46 eingelötet. Die Spiegel 26, 28, 30 werden mit den Justierfassungen 80, 82, 84 in die Ausnehmungen 20, 22, 24 ebenfalls mittels Glaslots eingelötet. Der so gebildete, abgeschlossene Hohlraum wird (in nicht dargestellter Weise) mit dem Helium-Neon-Gemisch unter geringem Druck gefüllt. Zwischen der Anode 64 und den Kathoden 76 und 78 werden Gasentladungen gezündet. Die Spiegel 26, 28 und 30 werden mittels der Justierfassungen in zwei Richtungen justiert, wie durch die Pfeile angedeutet ist. Die Justage erfolgt, bis schließlich Laserstrahlen linksherum und rechtsherum erzeugt werden.

In der justierten Stellung können die Spiegel dann durch eine geeignete Vergußmasse fixiert werden.

**Patentansprüche**

1. Gas-Ringlaser mit einem Keramikblock (10) mit einem einen Hohlraum bildenden, in sich geschlossenen, gasgefüllten Kanal (12) Elektroden (64, 76, 78) zur Erzeugung einer Gasentladung und Spiegeln (26, 28, 30), durch welche zwei Lichtbündel mit entgegengesetztem Umlaufsinn in dem Kanal (12) geführt werden, **dadurch gekennzeichnet, daß** der Keramikblock (10) aus einer Glaskeramik besteht, die aus einem Grünkeramikkörper durch Sintern hergestellt ist.

2. Gas-Ringlaser nach Anspruch 1, **dadurch gekennzeichnet, daß** die Spiegel (26, 28, 30) in metallischen Justierfassungen (80, 82, 84) mit einem Glaslot (96) in den Keramikblock (10) eingelötet sind.

3. Gas-Ringlaser nach Anspruch 1 oder 2, **dadurch gekennzeichnet, daß** metallische Durchführungen in den Hohlraum durch Glaslot gedichtet sind.

4. Verfahren zur Herstellung eines Gas-Ringlasers nach Anspruch 1, **gekennzeichnet durch** die Verfahrensschritte
   (a) Pressen eines Rohteils aus Grünkeramik,
   (b) spanende Bearbeitung des Rohteils und
   (c) Ausheizen des spanend bearbeiteten Rohteils zur Umwandlung der Grünkeramik in Glaskeramik durch Sinterung.

5. Verfahren nach Anspruch 4, **dadurch gekennzeichnet, daß** nach dem Sintern die Justierfassungen (80, 82, 84) mit den Spiegeln (26, 28, 30) mit Glaslot (98) in Ausnehmungen (20, 22, 24) auf der Mantelfläche des erhaltenen Glaskeramikblocks (10) eingelötet werden.

6. Verfahren nach Anspruch 5, **dadurch gekennzeichnet, daß** nach kompletter Montage des Gas-Ringlasers und Ausheizen des Keramikblocks (10) die Spiegel (26, 28, 30) in den Justierfassungen (80, 82, 84) justiert werden.

7. Verfahren nach einem der Ansprüche 4 bis 6, **dadurch gekennzeichnet, daß** Elektroden (64, 76, 78) mittels Glaslots in den Glaskeramikblock (10) eingelötet werden.